# EUROPEAN PATENT SPECIFICATION

(11) **EP 3 134 328 B1**
(45) Date of publication and mention of the grant of the patent: **18.07.2018**
(21) Application number: 15724769.3
(22) Date of filing: 21.04.2015
(51) Int. Cl.: B65D 85/804

(54) **CAPSULE FOR INFUSION PRODUCTS, IN PARTICULAR COFFEE**
KAPSELN FÜR INFUSIONEN, INSBESONDERE FÜR KAFFEE
CAPSULE POUR LA PREPARATION DES INFUSIONS EN PARTICULER DU CAFE

(30) Priority: 22.04.2014 IT TO20140338
(43) Date of publication of application: 01.03.2017
(73) Proprietor: Macchiavelli S.r.l., 40068 San Lazzaro di Savena (BO) (IT)
(72) Inventor: RONDELLI, Raffaele, I-40050 Argelato (Bologna) (IT)
(74) Representative: Rondano, Davide
(86) International application number: PCT/IB2015/052908
(87) International publication number: WO 2015/162556

(56) References cited:
- WO-A1-2005/026018
- WO-A1-2010/137955
- WO-A1-2013/132435
- WO-A1-2013/144838
- WO-A1-2013/171238
- WO-A2-2005/105609
- WO-A2-2014/012783
- DE-U1-202006 013 189

## Description

The present invention relates in general to a capsule for infusion products, in particular coffee, intended for use in a beverage extracting machine, as specified in the preamble of independent claim 1.

A capsule of the type identified above is known, for example, from WO2010/137955.

The invention is described below with specific reference to its application to a coffee capsule, but it is to be considered as generally applicable to a capsule for any other infusion product.

A coffee capsule typically comprises a cup-shaped body, in particular a body of frustoconical shape, which contains the coffee, and a cover which closes the cup-shaped body. The cup-shaped body is typically made of plastic material. The cover, which is a separate component from the cup-shaped body, is typically also made of plastic material or of an aluminium foil.

In order to produce the coffee/water infusion, the capsule is inserted into a percolation chamber of the coffee machine, where a certain quantity of hot water is injected under pressure into the cup-shaped body of the capsule through a plurality of holes provided in the bottom of the cup-shaped body, so as to mix with the coffee inside the cup-shaped body. The beverage produced by the infusion then exits from the cup-shaped body through a plurality of openings made in the cover of the capsule.

In some known solutions, the beverage exits from the cup-shaped body of the capsule through openings in the cover of the capsule which are produced by the interaction between the cover and a plurality of protruding elements which project inwards from a bottom wall of the percolation chamber of the machine. As a result of the pressure increase inside the cup-shaped body due to the introduction of the pressurized hot water, the cover, which is made for example of an aluminium foil, deforms until it comes into contact with the protruding elements of the percolation chamber. The contact between the protruding elements and the cover causes the cover to be cut in several points thereof. The infusion exits from the capsule through the passages created by these cuts and is conveyed to a final container, such as a coffee cup.

Moreover, as is known, measures are increasingly commonly adopted in coffee machines to facilitate the formation of a "cream", which is particularly appreciated by coffee consumers. The coffee cream is produced by promoting the formation of an intimate emulsion of air within the coffee infusion leaving the capsule. In order to obtain an acceptable coffee cream it is necessary to prevent air from remaining trapped in bubbles, as this would simply lead to the formation of a coffee froth, which is not at all appreciated by the average consumer.

Special devices, known as "emulsifying devices", have been devised for fitting to coffee machines in order to promote the formation of the coffee cream. However, the use of emulsifying devices in coffee machines disrupts the overall design of the machines, leading to considerable increases in the manufacturing cost of the machines, as well as to lower reliability of the beverage preparing and delivering process.

There is therefore a particularly strongly felt need to cause formation of the coffee cream by means of the particular shaping of the capsule, rather than by means of an emulsifying device fitted to the machine.

It is therefore an object of the present invention to provide a coffee capsule which facilitates the formation of the coffee cream.

This and other objects are fully achieved according to the present invention by means of a capsule having the characteristics specified in the attached independent claim 1.

Advantageous embodiments of the invention are the subject-matter of the dependent claims.

Briefly, the invention is based on the idea of providing a capsule in which the cup-shaped body and the cover are configured in such a manner as to allow, in use, exit of the infusion from the capsule only at a peripheral edge of the cover. The exit of the infusion from the capsule may take place either through a single passage extending along the whole peripheral edge of the cover, or through a plurality of passages, separate from each other, provided along the peripheral edge of the cover. Because of the peripheral friction to which the infusion is subject as it exits from the capsule through the peripheral passage(s) between the cup-shaped body and the cover, the desired coffee cream is obtained without the need to fit an appropriate emulsifying device to the machine.

Preferably, the single peripheral passage, or each peripheral passage where a plurality of peripheral passages separate from each other are provided for, is closed by a respective membrane formed by the cover, said membrane being adapted to deform so as to allow the infusion to flow out of the capsule when the pressure exerted by the infusion inside the capsule exceeds a given threshold. Accordingly, the exit of the infusion from the capsule takes place only when said pressure threshold is exceeded, whereas the infusion is retained inside the capsule until said pressure threshold is reached, enabling a full-bodied coffee to be obtained.

Preferably, the cover is releasably coupled to the cup-shaped body, thereby making the capsule recyclable, since the content of the capsule can be easily separated from the (plastic) material of the capsule itself.

A preferred embodiment of the present invention will now be described purely by way of non-limiting example with reference to the attached drawings, wherein:
Figure 1 shows a front view of a portion of the percolation head of a coffee machine with a coffee capsule according to the present invention inserted therein, the coffee capsule being only partially visible;
Figure 2 is a cross-sectional view, taken along section line II-II, of the portion of percolation head of Figure 1 and of the capsule inserted therein;
Figure 3 shows, on an enlarged scale, the detail B of Figure 2;
Figure 4 shows, on an enlarged scale, the detail B1 of Figure 3;
Figure 5 is a perspective view of a coffee capsule according to the present invention;
Figure 6 shows a front view of the capsule of Figure 5;
Figure 7 shows a top view of the capsule of Figure 5;
Figure 8 shows, on an enlarged scale, the detail D of Figure 5; and
Figure 9 is a cross-sectional view, taken along section line IX-IX, of the capsule of Figure 6.

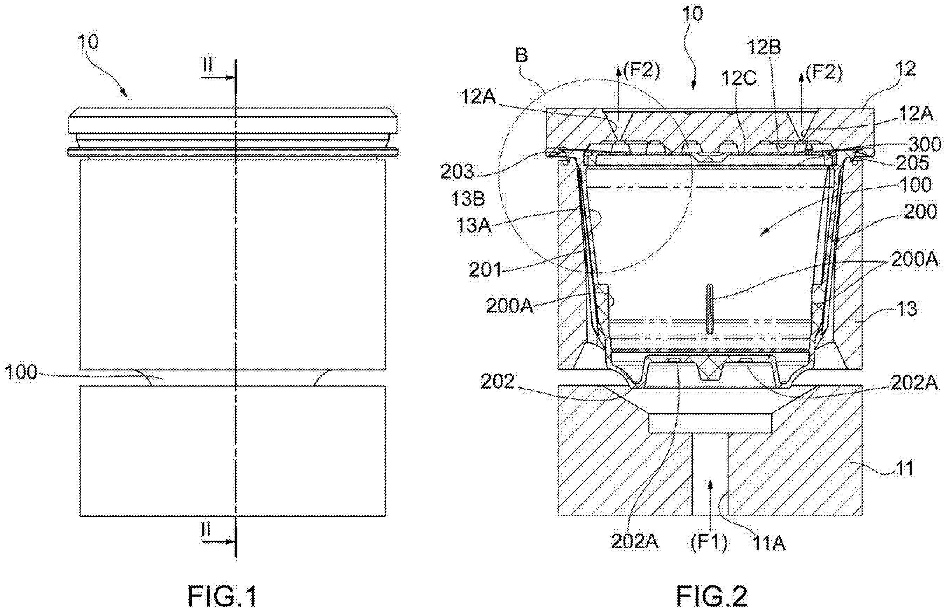

With reference first to Figures 1 and 2, a percolation head (only a portion of which is shown in Figures 1 and 2) of a conventional coffee machine is indicated 10, while a coffee capsule 100 according to the present invention, inserted into the percolation head 10, is indicated 100. Figures 1 and 2 show the percolation head 10 and the capsule 100 rotated through 180° relative to the actual orientation they normally have in coffee machines.

The percolation head 10 comprises a first plate 11 from which pressurized hot water enters through an inlet channel 11A, as indicated by arrow F1, a second plate 12 having a plurality of outlet openings 12A through which the water and coffee infusion exits, as indicated by arrow F2, and a percolation chamber 13 which is interposed between the two plates 11 and 12 and has a cavity 13A for receiving the capsule 100. A plurality of protruding elements 12C are provided, in per-se-known manner, on the inner face 12B of the second plate 12.

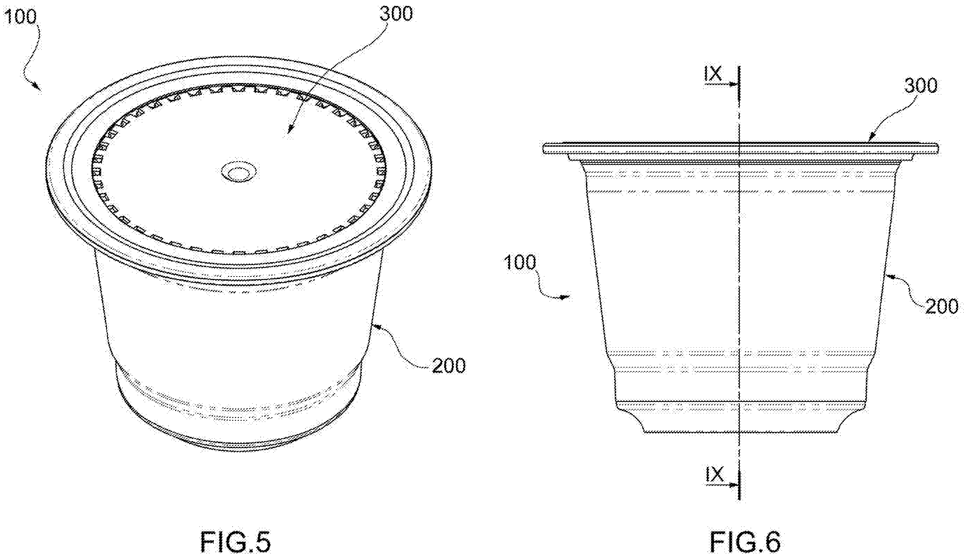

With reference to Figures 2 to 9, the capsule 100 comprises a cup-shaped body 200 and a cover 300 which closes the cup-shaped body 200 on the top side. As shown in Figure 2, in use, the outer surface of the cover 300 of the capsule 100 bears against the protruding elements 12C of the second plate 12 of the percolation head 10.

The cup-shaped body 200 comprises a side wall 201 and a bottom wall 202 which closes the side wall 201 on the bottom side. Preferably, the cup-shaped body 200 has a generally frustoconical shape.

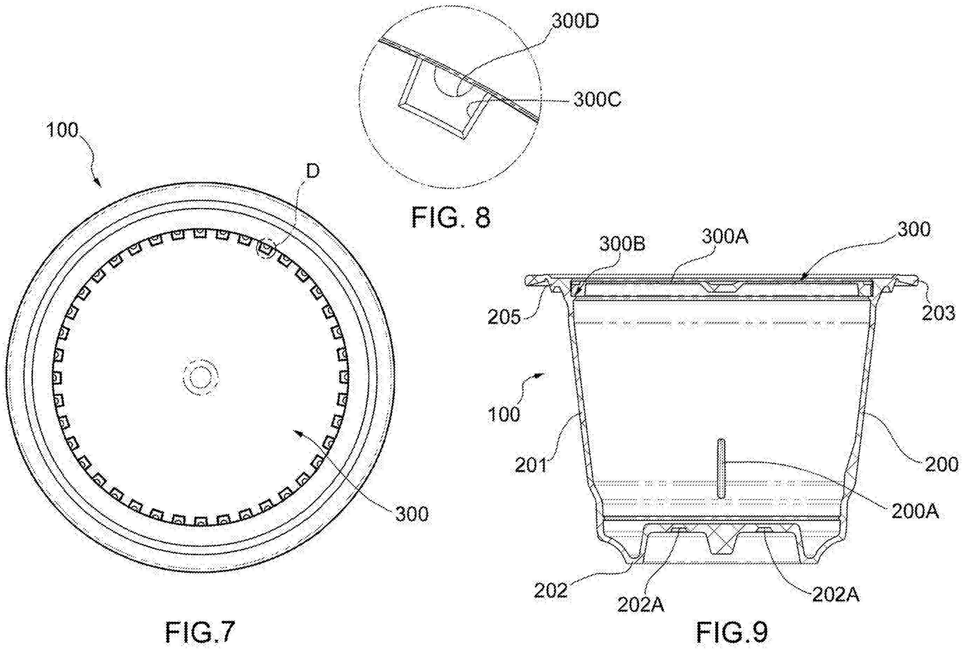

The side wall 201 ends at its top in an upper edge 203, which in plan view has the shape of a circular ring. Advantageously, but not necessarily, the side wall 201 has a plurality of slots 200A (Figures 2 and 7) which, in per-se-known manner, improve the formation of the infusion inside the cup-shaped body 200.

The bottom wall 202 will not be described in detail here, since its configuration has no relevance for the purposes of the invention. It will be sufficient to point out that the bottom wall 202 has a plurality of openings 202A through which the pressurized hot water flows into the cup-shaped body 200 of the capsule to form the desired infusion.

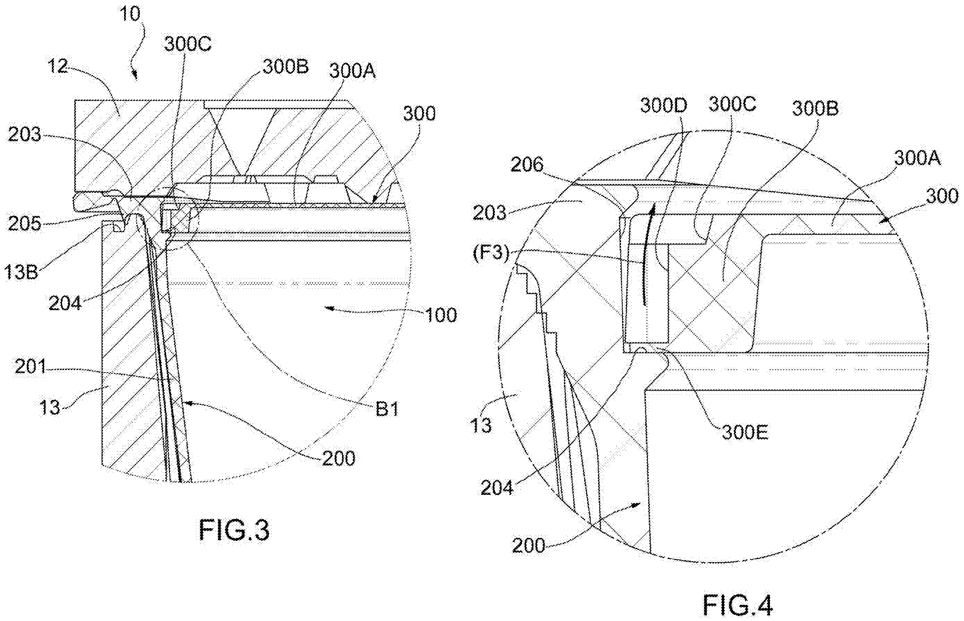

As shown in greater detail in Figures 3 and 4, a shoulder 204, which also has the shape of a circular ring in plan view, and on which the cover 300 bears in use, is provided at the upper edge 203 of the cup-shaped body 200. Preferably, the capsule 100 is configured in such a manner that the upper surface of the cover 300 never exceeds the height of the upper edge 203 of the cup-shaped body 200, that is to say, in such a manner that the cover 300 is entirely contained inside the cup-shaped body 200.

A catch 205, which projects downwards along the whole circumference of the edge 203 and which, in use, engages in a corresponding annular groove 13B formed on the top face of the percolation chamber 13, is provided at the upper edge 203 of the cup-shaped body 200. In use, once the catch 205 is engaged in the groove 13B, the second plate 12 is closed towards to the first plate 11 so as to clamp the edge 203 on to the top face of the percolation chamber 13.

The cover 300 comprises a middle portion 300A in the form of a solid circle and a peripheral edge 300B which surrounds the middle portion 300A. Preferably, the peripheral edge 300B has a greater thickness than the middle portion 300A and projects towards the inside of the cup-shaped body 200. The cover 300 is secured to the cup-shaped body 200 by fitting into an annular seat 206 provided in the upper edge 203, said annular seat being closed at its bottom end by the shoulder 204.

The peripheral edge 300B of the cover 300 is shaped substantially in the form of a circular ring. Preferably, a plurality of peripheral recesses 300C (shown in detail in Figure 8) are provided in the peripheral edge 300B, more precisely on the side of the peripheral edge facing outwardly of the capsule. Each peripheral recess 300C is associated to a corresponding peripheral cut-out 300D (Figures 4 and 8) which has, for example, a cross-section of substantially semi-circular shape, and which extends through most of the thickness of the peripheral edge 300B. Each pair formed by a peripheral recess 300C and by the associated peripheral cut-out 300D defines a peripheral passage closed at its bottom by a respective membrane 300E (Figure 4) which is formed by the peripheral edge 300B and bears on the shoulder 204 of the cup-shaped body 200.

The operation of the capsule 100 will now be described.

The pressurized hot water fed into the percolation chamber 13 through the inlet channel 11A of the first plate 11 of the percolation head 10 flows into the cup-shaped body 200 of the capsule 100, through the openings 202A provided in the bottom wall 202 of the capsule.

The pressure of the infusion inside the cup-shaped body 200 causes deformation of the middle portion 300A (thin portion) of the cover 300, but this portion remains intact and therefore prevents the infusion from leaving the capsule.

When the pressure of the infusion inside the cup-shaped body 200 exceeds a given threshold, the membranes 300E formed by the peripheral edge 300B of the cover 300 deform too, and therefore allow, also by virtue of the clearance between the cover 300 and the upper edge 203 of the cup-shaped body 200, the infusion to flow out of the cup-shaped body 200 through the passages formed by the peripheral cut-outs 300D and by the peripheral recesses 300C, as indicated by arrow F3 in Figure 4,.

The flow of the infusion through the gaps created between the shoulder 204 and the membranes 300E as a result of the deformation of the latter gives rise to a degree of friction on the infusion and therefore a degree of emulsification of the air in the infusion, this emulsification being then completed by the impact of the infusion against the protruding elements 12C formed by the second plate 12 of the percolation head 10.

A person skilled in the art will be capable, by suitably selecting the thicknesses of the middle portion 300A and/or of the peripheral edge 300B of the cover 300, as well as the number and/or the thickness of the membranes 300E, of optimizing the overall process of emulsification of the air in the infusion and therefore of obtaining the desired amount of coffee cream.

As will be evident in the light of the above description, a first advantage of the coffee capsule of the present invention is that it makes it possible to obtain a coffee which at the same time is full-bodied, owing to the first infusion step in which the infusion is retained inside the capsule, and has a high cream content, because of the peripheral friction to which the infusion is subject when it flows out of the capsule through the passages created between the cup-shaped body and the cover as a result of the deformation of the membranes, without the need to fit an appropriate emulsifying device to the machine, thereby enabling the capsule to be used on machines which are simpler and consequently more reliable.

A further advantage of the present invention is that the capsule is recyclable, since the cover is releasable from the cup-shaped body and therefore the content of the capsule is easily separable from the (plastic) material of the capsule.

Naturally, the principle of the invention remaining unchanged, the embodiments and the constructional details may be greatly modified with respect to those described and illustrated purely by way of a non-limiting example, without thereby departing from the scope of protection as defined in the appended claims.

In particular, it should be noted that the use of a plurality of pairs of peripheral recesses and cut-outs, each forming a respective peripheral passage closed at its bottom by a respective membrane, is one of the possible ways of enabling the infusion to exit from the capsule solely at the peripheral edge of the cover.

For example, in place of a plurality of peripheral passages separate from each other, a single peripheral passage can be provided between the upper edge of the cup-shaped body and the cover, this single passage being produced by appropriate shaping of the cover and of the upper edge of the cup-shaped body in the area where these components of the capsule are coupled with each other. In this case, the cover will preferably form a single peripheral membrane adapted to normally close the peripheral passage between the cup-shaped body and the cover, but to deform in case of an increase in the pressure of the infusion inside the capsule above a given threshold so as to allow the infusion to flow out of the capsule.

## Claims

1. Capsule (100) for infusion products, in particular coffee, comprising:
a cup-shaped body (200) with a side wall (201) having an upper edge (203) and with a bottom wall (202) in which a plurality of openings (202A) are defined for allowing water to enter the cup-shaped body (200); and
a cover (300) secured to the cup-shaped body (200) so as to close the cup-shaped body (200) on a side opposite to the bottom wall (202);
**characterized in that** at least one peripheral passage (300C, 300D) is provided between an upper edge (203) of the cup-shaped body (200) and a peripheral edge (300B) of the cover (300) in such a manner as to allow, in use, the infusion to exit from the capsule (100) only at the peripheral edge (300B) of the cover (300).

2. Capsule according to claim 1, wherein a single peripheral passage is provided between the upper edge (203) of the cup-shaped body (200) and the peripheral edge (300B) of the cover (300) and extends along the entire peripheral edge (300B) of the cover (300).

3. Capsule according to claim 2, wherein said single peripheral passage is closed by a membrane formed by the cover (300), said membrane being adapted to deform so as to allow the infusion to flow out of the capsule (100) when the pressure exerted by the infusion inside the capsule (100) exceeds a given threshold.

4. Capsule according to claim 1, wherein a plurality of peripheral passages (300C, 300D) separate from each other are provided between the upper edge (203) of the cup-shaped body (200) and the peripheral edge (300B) of the cover (300).

5. Capsule according to claim 4, wherein each peripheral passage (300C, 300D) is closed by a respective membrane (300E) formed by the cover (300), said membrane (300E) being adapted to deform so as to allow the infusion to flow out of the capsule (100) when the pressure exerted by the infusion inside the capsule (100) exceeds a given threshold.

6. Capsule according to any of the preceding claims, wherein the cover (300) is releasably coupled to the cup-shaped body (200).

7. Capsule according to claim 6, wherein the peripheral edge (300B) of the cover (300) engages in an annular seat (206) provided in the upper edge (203) of the side wall (201) of the cup-shaped body (200).

8. Capsule according to claim 7 when depending on claim 3 or claim 5, wherein the membrane, or respectively each membrane (300E), rests on a peripheral shoulder (204) which closes the bottom of the annular seat (206).

9. Capsule according to any of the preceding claims, wherein the cover (300) is entirely contained inside the cup-shaped body (200).

10. Capsule according to any of the preceding claims, wherein the cover (300) comprises, surrounded by the peripheral edge (300B), a middle portion (300A) having a thickness smaller than that of the peripheral edge (300B), said middle portion (300A) being adapted to deform as a result of the pressure exerted by the infusion inside the capsule (100).

## Patentansprüche

1. Kapsel (100) für Infusionsprodukte, insbesondere Kaffee, mit:
einem becherförmigen Körper (200) mit einer Seitenwand (201), die einen oberen Rand (203) aufweist, und mit einer Bodenwand (202), in der eine Vielzahl von Öffnungen (202A) definiert sind, um zu ermöglichen, dass Wasser in den becherförmigen Körper (200) eindringt, und
einem Deckel (300), der an dem becherförmigen Körper (200) befestigt ist, um den becherförmigen Körper (200) auf einer der Bodenwand (202) gegenüberliegenden Seite zu verschließen,
**dadurch gekennzeichnet, dass** mindestens ein peripherer Durchgang (300C, 300D) zwischen einer Oberkante (203) des becherförmigen Körpers (200) und einer Umfangskante (300B) des Deckels (300) derart vorgesehen ist, dass es der Infusion bei der Verwendung erlaubt ist, nur an der Umfangskante (300B) des Deckels (300) aus der Kapsel (100) auszutreten.

2. Kapsel nach Anspruch 1, wobei ein einziger peripherer Durchgang zwischen der Oberkante (203) des becherförmigen Körpers (200) und der Umfangskante (300B) des Deckels (300) vorgesehen ist und dieser sich über den gesamten Umfangsrand (300B) des Deckels (300) erstreckt.

3. Kapsel nach Anspruch 2, wobei der einzige periphere Durchgang durch eine Membran verschlossen ist, die durch den Deckel (300) ausgebildet wird, wobei die Membran derart angepasst ist, dass sie sich verformt, um die Infusion aus der Kapsel (100) abfließen zu lassen, wenn der durch die Infusion ausgeübte Druck in der Kapsel (100) eine bestimmte Schwelle überschreitet.

4. Kapsel nach Anspruch 1, wobei eine Vielzahl von peripheren Durchgängen (300C, 300D) getrennt voneinander zwischen der Oberkante (203) des becherförmigen Körpers (200) und der Umfangskante (300B) des Deckels (300) vorgesehen sind.

5. Kapsel nach Anspruch 4, wobei jeder periphere Durchgang (300C, 300D) durch eine entsprechende Membran (300E) verschlossen ist, die durch den Deckel (300) ausgebildet wird, wobei die Membran derart angepasst ist, dass sie sich verformt, um die Infusion aus der Kapsel (100) abfließen zu lassen, wenn der durch die Infusion ausgeübte Druck in der Kapsel (100) eine bestimmte Schwelle überschreitet.

6. Kapsel nach einem der vorhergehenden Ansprüche, wobei der Deckel (300) lösbar an den becherförmigen Körper (200) gekoppelt ist.

7. Kapsel nach Anspruch 6, wobei die Umfangskante (300B) des Deckels (300) in einen ringförmigen Sitz (206) eingreift, der in der Oberkante (203) der Seitenwand (201) des becherförmigen Körpers (200) vorgesehen ist.

8. Kapsel nach Anspruch 7, wenn abhängig von Anspruch 3 oder Anspruch 5, wobei die Membran oder jede Membran (300E) auf einer peripheren Schulter (204) aufliegt, die den Boden des ringförmigen Sitzes (206) verschließt.

9. Kapsel nach einem der vorhergehenden Ansprüche, wobei der Deckel (300) vollständig im Inneren des becherförmigen Körpers (200) enthalten ist.

10. Kapsel nach einem der vorhergehenden Ansprüche, wobei die Abdeckung (300) umgeben von der Umfangskante (300B) einen Mittelabschnitt (300A) umfasst, der eine Dicke aufweist, die kleiner ist als die der Umfangskante (300B), wobei der Mittelabschnitt (300A) dazu ausgebildet ist, sich als Ergebnis des durch die Infusion in der Kapsel (100) ausgeübten Drucks zu deformieren.

## Revendications

1. Capsule (100) pour des produits d'infusion, en particulier du café, comprenant :
un corps en forme de coupelle (200) avec une paroi latérale (201) ayant un bord supérieur (203) et avec une paroi inférieure (202) dans laquelle une pluralité d'ouvertures (202A) sont définies pour permettre à de l'eau d'entrer dans le corps en forme de coupelle (200) ; et
un couvercle (300) fixé au corps en forme de coupelle (200) de manière à fermer le corps en forme de coupelle (200) sur un côté opposé à la paroi inférieure (202) ;
**caractérisée en ce qu'**au moins un passage périphérique (300C, 300D) est prévu entre un bord supérieur (203) du corps en forme de coupelle (200) et un bord périphérique (300B) du couvercle (300) de manière à permettre, lors de l'utilisation, à l'infusion de sortir de la capsule (100) uniquement au niveau du bord périphérique (300B) du couvercle (300).

2. Capsule selon la revendication 1, dans laquelle un passage périphérique unique est prévu entre le bord supérieur (203) du corps en forme de coupelle (200) et le bord périphérique (300B) du couvercle (300) et s'étend le long du bord périphérique entier (300B) du couvercle (300).

3. Capsule selon la revendication 2, dans laquelle ledit passage périphérique unique est fermé par une membrane formée par le couvercle (300), ladite membrane étant adaptée pour se déformer de manière à permettre à l'infusion de s'écouler à l'extérieur de la capsule (100) quand la pression exercée par l'infusion à l'intérieur de la capsule (100) dépasse un seuil donné.

4. Capsule selon la revendication 1, dans laquelle une pluralité de passages périphériques (300C, 300D) séparés les uns des autres sont prévus entre le bord supérieur (203) du corps en forme de coupelle (200) et le bord périphérique (300B) du couvercle (300).

5. Capsule selon la revendication 4, dans laquelle chaque passage périphérique (300C, 300D) est fermé par une membrane respective (300E) formée par le couvercle (300), ladite membrane (300E) étant adaptée pour se déformer de manière à permettre à l'infusion de s'écouler à l'extérieur de la capsule (100) quand la pression exercée par l'infusion à l'intérieur de la capsule (100) dépasse un seuil donné.

6. Capsule selon l'une quelconque des revendications précédentes, dans laquelle le couvercle (300) est accouplé de manière amovible au corps en forme de coupelle (200).

7. Capsule selon la revendication 6, dans laquelle le bord périphérique (300B) du couvercle (300) entre en prise dans un siège annulaire (206) prévu dans le bord supérieur (203) de la paroi latérale (201) du corps en forme de coupelle (200).

8. Capsule selon la revendication 7 quand elle dépend de la revendication 3 ou de la revendication 5, dans laquelle la membrane, ou respectivement chaque membrane (300E), repose sur un épaulement périphérique (204) qui ferme le fond du siège annulaire (206).

9. Capsule selon l'une quelconque des revendications précédentes, dans laquelle le couvercle (300) est entièrement contenu à l'intérieur du corps en forme de coupelle (200).

10. Capsule selon l'une quelconque des revendications précédentes, dans laquelle le couvercle (300) comprend, entourée par le bord périphérique (300B), une portion centrale (300A) ayant une épaisseur inférieure à celle du bord périphérique (300B), ladite portion centrale (300A) étant adaptée pour se déformer à la suite de la pression exercée par l'infusion à l'intérieur de la capsule (100).
